(19) Europäisches Patentamt
European Patent Office
Office européen des brevets

(11) EP 0 564 048 B1

(12) EUROPEAN PATENT SPECIFICATION

(45) Date of publication and mention of the grant of the patent:
**16.07.1997 Bulletin 1997/29**

(51) Int Cl.[6]: **C08F 8/30**, C08C 19/40, C08G 81/02, C08C 19/22

(21) Application number: **93200944.2**

(22) Date of filing: **01.04.1993**

# (54) A method of chemically cross-linking sterically hindered epoxidized polymers

Verfahren zur chemischen Vernetzung von sterisch gehinderten epoxydierten Polymeren

Procédé de réticulation chimique de polymères époxydés à empêchement stérique

(84) Designated Contracting States:
**BE DE ES FR GB IT NL**

(30) Priority: **03.04.1992 US 863644**

(43) Date of publication of application:
**06.10.1993 Bulletin 1993/40**

(73) Proprietor: **SHELL INTERNATIONALE RESEARCH MAATSCHAPPIJ B.V.**
**2596 HR Den Haag (NL)**

(72) Inventors:
- **Bening, Robert Charles**
  **Katy, Texas 77450 (US)**
- **Erickson, James Robert**
  **Katy, Texas 77450 (US)**
- **St. Clair, David John**
  **Houston, Texas 77079 (US)**

(56) References cited:
**US-A- 3 175 997**
**US-A- 4 051 199**
**US-A- 4 105 714**

- **CHEMICAL ABSTRACTS, vol. 92, no. 2, January 1980, Columbus, Ohio, US; abstract no. 7355c, TAKIZAWA, MINORU 'MANUFACTURE OF HYDROPHILIC POLYMERS' page 30; column 1**
- **PATENT ABSTRACTS OF JAPAN vol. 10, no. 345 (C-386)(2401) 20 November 1986**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 564 048 B1

## Description

This invention relates to a novel method of cross-linking block polymers possessing sterically hindered epoxy groups. These polymers contain di-, tri- and tetra-alkyl substituted olefinic epoxy groups. Additionally, the invention relates to novel polymers made by the claimed method and adhesives, sealants and coatings made with the polymers.

Curing of adhesives based on conjugated diolefins, and optionally including vinyl aromatics, has increased the range of service properties for these adhesives. Radiation curing and chemical curing are known. This curing causes covalent cross-linking of the polymerized conjugated diolefins which is evidenced by a high gel content of the cross-linked polymer. Before cross-linking, the polymers are solution or melt processable but after cross-linking, the gels are insoluble and infusible. Crosslinking therefore enhances solvent resistance and improves elevated temperature shear properties and, in coatings, improves hardness as well. The compositions can therefore be applied to a substrate in a melt or solution and then cross-linked to form a superior adhesive or coating.

Further, the known curable adhesives and coatings which are based on conjugated diolefin block copolymers do not have particularly good long term heat, weather and ultraviolet stability due to the need to utilize unhydrogenated polymers having one residual aliphatic double bond per polymerized unit. The known vinyl aromatic-conjugated diolefin block copolymer based coatings and adhesives which are curable are unhydrogenated polymers. Hydrogenation is known to improve long term heat, weather and ultraviolet stability, but it removes the double bonds which are needed to effect the curing. Such curing methods are not effective when the polymers are hydrogenated.

Cross-linking can be achieved by radiation curing. However, radiation curing has certain disadvantages including the necessity for additional expensive equipment when EB processing or photoinitiation and acrylic monomers when using UV. When chemical cross-linking is utilized, certain of these disadvantages are eliminated.

It is known that epoxidized polymers may be cured without the use of radiation by addition of a cationic initiator. The epoxy-containing polymers may also be cross-linked by the addition of multifunctional carboxylic acids, acid anhydrides, and alcohols, and in general by the curing methods described in U.S. 3,970,608. However, hindered epoxies, such as are obtained by epoxidization of most conjugated diene copolymers require long reaction times and high bake temperatures to cure with conventional curing agents, such as anhydride, and the scope of radiation cure is limited due to technical considerations (substrate shape, etc.) and capital cost. It would be advantageous to cure these polymers with curing agents and conditions common to the industry using ambient or baked cures so that investment in expensive equipment is not required.

Amino resins have been widely used to cross-link various polymers and resins. However, up to the present time it has been thought that chemical cross-linking could only be achieved in polymers and resins which possess functional groups containing active protons, that is of the structure X-H where X is nitrogen, sulphur or oxygen, such as carboxylic acid, hydroxy or amide groups. Typically, only "advanced" epoxy resins, possessing hydroxy functionality (such as EPON 1007 made by Shell) ( EPON is a trade mark), are cured with amino resins. For instance, see 50 Years of Amino Coating Resins, edited and written by Albert J. Kirsch, published in 1986 by American Cyanamid Company, which describes in detail a whole series of amino resins which are useful in the present invention. It is stated therein on page 20 that the backbone polymers, i.e., the polymers which are to be cross-linked, "must contain one or more of the functional groups - hydroxy, carboxy, amide - listed above to be useful with amino resins".

It is an object of the present invention to provide a cross-linked polymeric composition which is solution or melt processable before cross-linking and has a high gel content after cross-linking. In another aspect, it is an object to provide a process to prepare this cross-linked polymeric composition. In another aspect, it is an object of this invention to provide a coating composition which is processable at relatively high solids contents before cross-linking and which has excellent film properties after cross-linking.

The present invention is a method of curing epoxidized polymers which do not have a significant amount of functional groups of the structure XH, where X is nitrogen, sulphur or oxygen, normally thought to undergo a cross-linking reaction with amino resins and which have at least 50 olefinic epoxy groups per molecule which are predominately sterically hindered, that is, di-, tri- or tetra-alkyl substituted, and which comprise at least one epoxidized conjugated diolefin monomer. The polymer is reacted with an amino resin in the presence of a proton-donating acid catalyst, preferably for 5 seconds to 30 min. at 100 to 300 °C, most preferably 10 to 30 min. at 100 to 200 °C. The preferred polymers comprise at least one block which is comprised of diene, hydrogenated diene and/or hydrogenated diene and monoalkenyl aromatic hydrocarbon monomer units and at least one block which contains more epoxidized conjugated diolefin monomer units than the other block. In another embodiment, the polymer may contain up to 75% by weight of a vinyl aromatic hydrocarbon.

The amount of amino resin used generally ranges from 0.5 to 40%, preferably 3 to 30%, of the weight of the polymer and the preferred amino resins for use in the present invention are alkylated melamine-formaldehyde resin, glycoluril-formaldehyde resin and urea-formaldehyde resin. The amount of acid catalyst used generally ranges from 0.1 to 4% of the weight of the polymer. The present invention also relates to a cured polymer made according to the method described above. Finally, the invention relates to an adhesive, coating or sealant made with such a cured polymer.

The general methods of making block copolymers are reviewed by R. P. Quirk and J. Kim, "Recent Advances in Thermoplastic Elastomer Synthesis," Rubber Chemistry and Technology, volume 64 No. 3 (1991). Especially useful is the method of sequential anionic polymerization of monomers. The types of monomers that will undergo living polymerization are relatively limited for the anionic method, with the most favourable being conjugated diolefins and monoalkenyl aromatic hydrocarbon monomers. Generally, a hydrogenation step is needed to prepare a saturated polymer. Hence, a polymer of this invention that is both epoxidized and saturated usually requires both an epoxidation and a hydrogenation step. However, polymers made by sequential polymerization of a suitable diolefin monomer and a monomer having only one carbon-carbon double bond or by sequential polymerization of two different mixtures (ratios) of such monomers, using either a monofunctional initiator, a monofunctional initiator and a coupling agent, or a multifunctional initiator, may be epoxidized and would not have to be hydrogenated to produce an epoxidized polymer of this invention that is saturated.

The polymers containing olefinic unsaturation or both aromatic and olefinic unsaturation may be prepared using anionic initiators or polymerization catalysts. Such polymers may be prepared using bulk, solution or emulsion techniques. Polymers prepared in solution are preferred for subsequent epoxidation and hydrogenation.

A very useful embodiment of this invention may be conveniently prepared by anionic polymerization, preparing blocks A and B, each consisting of homopolymers or copolymers of conjugated diene monomers or copolymers of conjugated diene monomers and alkyl aryl monomers wherein the monomers used for the A blocks are such that the A blocks have a greater average number of highly substituted residual olefinic double bonds per unit of block mass than do the B blocks. This and other useful embodiments are more fully described in commonly assigned copending European patent application No. 0516.203.

The polymer is epoxidized under conditions that enhance the epoxidation of the more highly substituted olefinic double bonds, such as by the use of peracetic acid, wherein the rate of epoxidation is generally greater the greater the degree of substitution of the olefinic double bond (rate of epoxidation: tetrasubstituted > trisubstituted > disubstituted > monosubstituted olefinic double bond). Sufficient epoxidation is done to achieve the desired level of epoxidation in the A blocks (within the range of 0.2 to 10 Meq/g). $^1$H NMR can be used to determine the loss of each type of double bond and the appearance of epoxide. Further, the amount of epoxy can also be measured by the direct titration with perchloric acid (0.1N) and quarternary ammonium halogenide (tetraethyl-ammonium bromide) where the sample is dissolved in methylene chloride. Epoxy titration is described in <u>Epoxy Resins Chemistry and Technology</u>, edited by Clayton A. May and published in 1988 (p. 1065).

If a substantially saturated polymer is desired, the epoxidized polymer may be hydrogenated to remove substantially all remaining olefinic double bonds (ODB) and normally leaving substantially all of the aromatic double bonds. If only substantially saturated interior blocks are desired, the epoxidized polymer may be partially hydrogenated in a selective manner with a suitable catalyst and conditions (like those in Re 27,145, U.S. Patent 4,001,199 or with a titanium catalyst such as is disclosed in U.S. Patent 5,039,755, or by fixed bed hydrogenation) that favour the hydrogenation of the less substituted olefinic double bonds (rate of hydrogenation: monosubstituted > disubstituted > trisubstituted > tetrasubstituted olefinic double bonds) and also leaves aromatic double bonds intact, so as to saturate the B blocks and leave some or all of the unsaturation intact in the A blocks.

Alternatively, selective partial hydrogenation of the polymer may be carried out before epoxidation such that between 0.2 and 11.6 Meq of olefinic double bonds are left intact in the A block for subsequent epoxidation. Fully epoxidizing 11.6 Meq of ODB per gram of A block gives 10.0 Meq of epoxide per gram of A block in the final polymer because of a 16% weight gain due to the added oxygen. If selective partial hydrogenation is done first, the epoxidation does not need to be selective with respect to the degree of substitution on the olefinic double bonds, since the objective is usually to epoxidize as many of the remaining ODB's as possible. After hydrogenation, it is preferred that the ratio of ODB's in the A blocks to that in the B blocks be at least 3:1, preferably at least 5:1.

Generally, if a hydrogenation step is used, sufficient improvement of the polymer's chemical and heat stability should be achieved to justify the extra expense and effort involved, and this generally means at least saturating the interior blocks B to the point that they have less than 1 Meq of olefinic double bonds per gram of B left intact. For greatest heat stability, all of the olefinic double bonds, anyplace in the polymer, that are not epoxidized should be removed so that less than 1 Meq of ODB per gram of polymer remain, more preferably less than 0.6 Meq/g, and most preferably less than about 0.3 Meq/g of polymer.

In general, when solution anionic techniques are used, conjugated diolefin polymers and copolymers of conjugated diolefins and alkenyl aromatic hydrocarbons are prepared by contacting the monomer or monomers to be polymerized simultaneously or sequentially with an anionic polymerization initiator such as group IA metals, their alkyls, amides, silanolates, naphthalides, biphenyls and anthracenyl derivatives. It is preferred to use an organo alkali metal (such as sodium or potassium) compound in a suitable solvent at a temperature within the range from -150 °C to 300 °C, preferably at a temperature within the range from 0 °C to 100 °C. Particularly effective anionic polymerization initiators are organo lithium compounds having the general formula:

$RLi_n$

wherein R is an aliphatic, cycloaliphatic, aromatic or alkyl-substituted aromatic hydrocarbon radical having from 1 to 20 carbon atoms and n is an integer of 1 to 4.

Conjugated diolefins which may be polymerized anionically include those conjugated diolefins containing from 4 to 24 carbon atoms such as 1,3-butadiene, isoprene, piperylene, methylpentadiene, phenylbutadiene, 3,4-dimethyl-1,3-hexadiene, and 4,5-diethyl-1,3-octadiene. Isoprene and butadiene are the preferred conjugated diene monomers for use in the present invention because of their low cost and ready availability. The conjugated diolefins which may be used in the present invention include isoprene (2-methyl-1,3-butadiene), 2-ethyl-1,3-butadiene, 2-propyl-1,3-butadiene, 2-butyl-1,3-butadiene, 2-pentyl-1,3-butadiene (2-amyl-1,3-butadiene), 2-hexyl-1,3-butadiene, 2-heptyl-1,3-butadiene, 2-octyl-1,3-butadiene, 2-nonyl-1,3-butadiene, 2-decyl-1,3-butadiene, 2-dodecyl-1,3-butadiene, 2-tetradecyl-1,3-butadiene, 2-hexadecyl-1,3-butadiene, 2-isoamyl-1,3-butadiene, 2-phenyl-1,3-butadiene, 2-methyl-1,3-pentadiene, 2-methyl-1,3-hexadiene, 2-methyl-1,3-heptadiene, 2-methyl-1,3-octadiene, 2-methyl-6-methylene-2,7-octadiene (myrcene), 2-methyl-1,3-nonyldiene, 2-methyl-1,3-decyldiene, and 2-methyl-1,3-dodecyldiene, as well as the 2-ethyl, 2-propyl, 2-butyl, 2-pentyl, 2-hexyl, 2-heptyl, 2-octyl, 2-nonyl, 2-decyl, 2-dodecyl, 2-tetradecyl, 2-hexadecyl, 2-isoamyl and 2-phenyl versions of all of these dienes. Also included are 1,3-butadiene, piperylene, and 4,5-diethyl-1,3-octadiene. Di-substituted conjugated diolefins which may be used include 2,3-dialkyl-substituted conjugated diolefins such as 2,3-dimethyl-1,3-butadiene, 2,3-diethyl-1,3-pentadiene, 2,3-dimethyl-1,3-hexa-diene, 2,3-diethyl-1,3-heptadiene, and 2,3-dimethyl-1,3-octadiene and 2,3-fluoro-substituted conjugated diolefins such as 2,3-difluoro-1,3-butadiene, 2,3-difluoro-1,3-pentadiene, 2,3-difluoro-1,3-hexadiene, 2,3-difluoro-1,3-heptadiene, and 2,3-fluoro-1,3-octadiene. Alkenyl aromatic hydrocarbons which may be copolymerized include vinyl aryl compounds such as styrene, various alkyl-substituted styrenes, alkoxy-substituted styrenes, vinyl naphthalene, and alkyl-substituted vinyl naphthalenes.

Conjugated dienes can also be copolymerized with methacrylates, such as t-butyl methacrylate, as described in U.S. Patent 5,002,676, and such copolymers can be epoxidized and hydrogenated as described herein. The preferred use position in the polymer for methacrylates, when used, is in asymmetric arms in a star polymer.

There are a wide variety of coupling agents or initiators that can be employed. Any polyfunctional coupling agent which contains at least two reactive sites can be employed. Examples of the types of compounds which can be used include the polyepoxides, polyisocyanates, polyimines, polyaldehydes, polyketones, polyanhydrides, polyesters, and polyhalides. These compounds can contain two or more types of functional groups such as the combination of epoxy and aldehyde groups, isocyanate and halide groups. Many suitable types of these polyfunctional compounds have been described in U.S. Patent Nos. 3,595,941; 3,468,972; 3,135,716; 3,078,254; 4,096,203 and 3,594,452.

When the coupling agent has two reactive sites such as dibromoethane, the polymer will have a linear A-B-A structure. When the coupling agent has three or more reactive sites, such as silicon tetrachloride, the polymer will have a branched structure, such as $(A\text{-}B)_n\text{-}X$. Coupling monomers are coupling agents where several monomer units are necessary for every chain end to be coupled. Divinylbenzene is the most commonly used coupling monomer and results in star polymers.

In general, any of the solvents known in the prior art to be useful in the preparation of such polymers may be used. Suitable solvents, then, including straight- and branched chain hydrocarbons such as pentane, hexane, heptane, and octane, as well as, alkyl-substituted derivatives thereof; cycloaliphatic hydrocarbons such as cyclopentane, cyclohexane, and cycloheptane, as well as alkyl-substituted derivatives thereof; aromatic and alkyl-substituted derivatives thereof; aromatic and alkyl-substituted aromatic hydrocarbons such as benzene, naphthalene, toluene, and xylene; hydrogenated aromatic hydrocarbons such as tetraline, and decalin; linear and cyclic ethers such as methyl ether, methylethyl ether, diethyl ether, and tetrahydrofuran.

More specifically, the polymers of the present invention are made by the anionic polymerization of conjugated diene monomers and alkenyl aromatic hydrocarbon monomers in a hydrocarbon solvent at a temperature between 0 and 100°C using an alkyl lithium initiator. The living polymer chains are usually coupled by addition of divinyl monomer to form a star polymer. Addition monomers may or may not be added to grow more arms or to terminally functionalize, such as with ethylene oxide or carbon dioxide to give hydroxyl or carboxyl groups, respectively, and the polymer and the living chain ends are quenched with a proton source such as methanol or hydrogen. Polymerization may also be initiated from monomers such as m-divinylbenzene and m-diisopropenylbenzene treated with butyl lithium.

The epoxidized block copolymers may have weight average molecular weights of from 3,000 to 3,000,000. Lower molecular weights require excessive cross-linking whereas higher molecular weights are very difficult to apply to a substrate by melt or other means. More preferably, the polymer is one having a weight average molecular weight of from 15,000 to 2,000,000. Most preferably, the polymer is one having a weight average molecular weight of from 40,000 to 1,000,000 because this offers the best balance between cost, ability to use the mildest curing conditions and achieving good application behaviour. It is preferred that the blocks comprising predominantly epoxidized diolefin monomer

units have molecular weights between 100 and 200,000 and, if present, the blocks comprising predominantly aromatic monomer units have molecular weights between 500 and 50,000 because polymers built from larger blocks are very difficult to apply and smaller blocks fail to adequately localize covalent or physical cross-linking. For coatings applications, it is sometimes preferred that at least one block be a random copolymer of a hydrogenated diene monomer and a vinyl aromatic hydrocarbon in order to increase the hardness of the final coating.

Molecular weights of linear polymers or unassembled linear segments of polymers such as mono-, di-, and triblock arms of star polymers before coupling are conveniently measured by Gel Permeation Chromatography (GPC), where the GPC system has been appropriately calibrated. Polymers of known molecular weight are used to calibrate and these must be of the same molecular structure and chemical composition as the unknown linear polymers or segments that are to be measured. For anionically polymerized linear polymers, the polymer is essentially monodisperse and it is both convenient and adequately descriptive to report the "peak" molecular weight of the narrow molecular weight distribution observed. Measurement of the true molecular weight of the final coupled star polymer is not as straightforward or as easy to make using GPC. This is because the star shaped molecules do not separate and elute through the packed GPC columns in the same manner as do the linear polymers used for the calibration, and, hence, the time of arrival at a UV or refractive index detector is not a good indicator of the molecular weight. A good method to use for a star polymer is to measure the weight average molecular weight by light scattering techniques. The sample is dissolved in a suitable solvent at a concentration less than 1.0 gram of sample per 100 millilitres of solvent and filtered using a syringe and porous membrane filters of less than 0.5 microns pore size directly into the light scattering cell. The light scattering measurements are performed as a function of scattering angle and of polymer concentration using standard procedures. The differential refractive index (DRI) of the sample is measured at the same wavelength and in the same solvent used for the light scattering. The following references are of interest:

1. Modern Size-Exclusion Liquid Chromatography, M. W. Yau, J. J. Kirkland, D. D. Bly, John Wiley & Sons, New York, NY, 1979.
2. Light Scattering from Polymer Solutions, M. B. Huglin, ed., Academic Press, New York, NY 1972.
3. W. Kay and A. J. Havlik, Applied Optics, 12, 541 (1973).
4. M. L. McConnell, American Laboratory, 63, May, 1978.

Upon epoxidation of the preferred embodiment polymer, some blocks, A, have a greater concentration of di-, tri-, and tetrasubstituted olefinic epoxide than other blocks, B. Specifically, the Meq of such epoxide per gram of the A blocks will be from 0.2 Meq/g to 10 Meq/g, preferably from 0.5 to 8 Meq/g and most preferably 1 to 5 Meq/g. The ratio of the concentration of such epoxide in the A blocks to that of the B blocks will be at least 3:1 and preferably greater than 5:1. If there were greater epoxidation in the A blocks, the polymer may be too hydrophilic, leading to moisture sensitivity in the cured formulation. If more epoxy is present in the B blocks, the polymers would over cross-link, have little elasticity and be unsuitable for the applications intended.

The epoxidized copolymers of this invention can be prepared by the epoxidation procedures as generally described or reviewed in the Encyclopedia of Chemical Technology 19, 3rd ed., 251-266 (1980), D. N. Schulz, S. R. Turner, and M. A. Golub, Rubber Chemistry and Technology, 5, 809 (1982), W-K. Huang, G-H. Hsuie, and W-H. Hou, Journal of Polymer Science, Part A: Polymer Chemistry, 26, 1867 (1988), and K. A. Jorgensen, Chemical Reviews, 89, 431 (1989), and Hermann, Fischer, and Marz, Angew. Chem. Int. Ed. Engl. 30 (No. 12), 1638 (1991).

For instance, epoxidation of the base polymer can be effected by reaction with organic peracids which can be preformed or formed in situ. Suitable preformed peracids include peracetic and perbenzoic acids. In situ formation may be accomplished by using hydrogen peroxide and a low molecular weight carboxylic acid such as formic acid. Alternatively, hydrogen peroxide in the presence of acetic acid, or acetic anhydride and a cationic exchange resin, will form a peracid. The cationic exchange resin can optionally be replaced by a strong acid such as sulphuric acid or p-toluenesulphonic acid. The epoxidation reaction can be conducted directly in the polymerization cement (polymer solution in which the polymer was polymerized) or, alternatively, the polymer can be redissolved in an inert solvent such as toluene, benzene, hexane, cyclohexane, and methylenechloride and epoxidation conducted in this new solution or can be epoxidized neat. Epoxidation temperatures on the order of 0 to 130 °C and reaction times from 0.1 to 72 hours may be utilized. When employing hydrogen peroxide and acetic or formic acid together with a catalyst such as sulphuric acid, the product can be a mixture of epoxide and hydroxy ester. Due to these side reactions caused by the presence of an acid and to gain the maximum selectivity with respect to different levels of substitution on the olefinic double bonds, it is preferable to carry out the epoxidation at the lowest possible temperature and for the shortest time consistent with the desired degree of epoxidation. Epoxidation may also be accomplished by treatment of the polymer with hydroperoxides or oxygen in the presence of transition metals such as Mo, W, Cr, V and Ag, or with methyl-trioxorhenium/hydrogen peroxide with and without amines present. $^1$H NMR is an effective tool to determine which and how much of each type of ODB is epoxidized.

Polymers of the present invention do not include those which contain significant amounts of functional groups that

are normally considered necessary for amino resin cross-linking - i.e. groups containing active protons such as hydroxy, carboxy, mercaptan and amide. A polymer is unfunctionalized if it does not contain a significant amount of functional groups. Quantitizing what constitutes a significant amount of functional groups is difficult at best because of differences between various amino resins, acids, polymers, the level of these in a given formulation, the type of functional group, the conditions of cure, etc. Also complicating the matter is the degree of cure required by the enduse application. Only a high polymer gel content may be needed to impart a needed property, or both high gel content and a significant cross-link density, enough to prevent appreciable swelling by a good solvent, may be needed.

Brushing aside the above difficulties, two "rules of thumb" are offered. First, if only high polymer gel content (greater than about 60-70%) is needed, significant functionality is present when the number of milliequivalents of functionality per 100 grams of the polymer equals or exceeds the value F, where F is given by the following relationship.

$$F = k \cdot \frac{10\ \text{Meq/100 gram}}{M_w \cdot 10^{-5}}$$

**and k is somewhere between about 1 and 3. may vary over wider limits for very high or very low molecular weight polymers.**

Second, if both high gel content and significant cross-link density are required, significant functionality is present when the number of milliequivalents of functionality per gram of polymer equals or exceeds the larger of either the F value or about 10 Meq/100g. For example, if the weight average molecular weight, $M_w$, of the polymer is 100,000 daltons the value of F is 10 to 30 Meq/100g. If the $M_w$ is one million daltons, the value of F is 1 to 3 Meq/100g and a high gel content will be obtained at or above this level. The polymer will swell appreciably when exposed to a good solvent unless the level of functionality equals or exceeds 10 Meq/100 g of polymer.

Polymers containing a substantial number of olefinic sites in which at least one of the olefinic carbons is tertiary (TU sites) such as those derived from isoprene, can also be cross-linked with amino resins, as was known from e.g. European patent application No. 0468.593. As will be shown in the examples, polymers containing TU levels comparable to the levels of epoxidation in the polymer of the current invention do not cross-link efficiently with amino resins. Clearly, the epoxy functionality is necessary if essentially saturated olefin polymers are to be cross-linked with amino resins. It is also likely that epoxidation of unsaturated polymers, especially relatively low molecular weight unsaturated polymers, will allow more extensive cross-linking at lower levels of amino resin. If polymers containing substantial levels of TU sites as well as epoxidized sites are cured according to the present invention, it is likely that some of the cure will occur through reaction of the TU sites.

Any polymer containing olefinic epoxy functionality which is sterically hindered may be cross-linked according to the present invention. Sterically hindered means the olefinic epoxy groups are di-, tri- or tetra-alkyl substituted. Tri- and tetra-alkyl substitution is preferred.

Polymers having epoxy groups of the following structures are preferred:

(1) 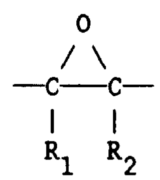

where $R_1$ and $R_2$ are selected from the group consisting of hydrogen, alkyl, alkenyl and aryl

(2) 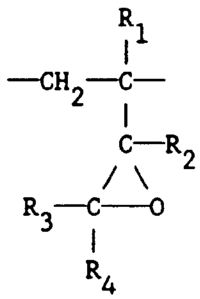 or (3) 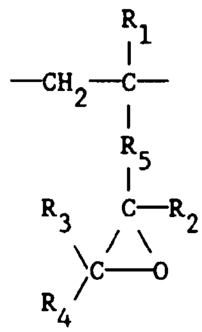

where $R_1$, $R_2$, $R_3$ and $R_4$ are selected from the group that consists of hydrogen, alkyl, alkenyl and aryl and at least one of $R_2$, $R_3$ and $R_4$ is not hydrogen and $R_5$ is selected from the group consisting of alkyl, alkenyl and aryl.

A specific example is a polymer made from 1,3-isoprene monomer such that epoxidized 1,4-isoprene units are produced. An epoxidized 1,4-isoprene unit contains structural feature 1 where $R_1$ is hydrogen and $R_2$ is $CH_3$.

(1) 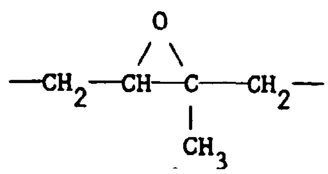

Another example is an isoprene based polymer where epoxidized 3,4-isoprene monomer units result. This is an example of structure 2 where $R_2$ is $CH_3$ and $R_1$=$R_3$=$R_4$=hydrogen.

(2) 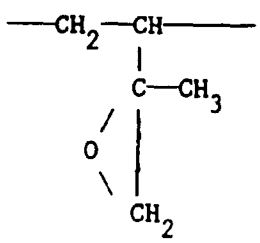

The above polymers lack active protons and have not been considered cross-linkable with amino resins. Surprisingly, however, we have found that epoxidized polymers containing sterically hindered epoxy groups as the only significant functionality are cross-linkable with amino resins. These polymers may be cross-linked with themselves or with other polymers of the type described herein. They may also be cross-linked with polymers that are normally cross-linkable with amino resins such as polyesters, "advanced" epoxy resins (which possess secondary alcohol groups), acrylics, alkyds, polyurethanes, etc. - a heretofore unheard of possibility.

Epoxidized polymers such as those disclosed in U.S. Patent 3,699,184, may be acceptable in the compositions of the present invention. This patent discloses block copolymers comprising at least one monoalkenyl arene block and at least one epoxidized conjugated diene block and hydrogenated derivatives of these block copolymers. The epoxidized block copolymers disclosed in '184 are preferably partially hydrogenated with the hydrogenation saturating at least 50 percent of the initial olefinic unsaturation. At least 10 percent of the initial olefinic unsaturation is reduced by epoxidation by contacting the polymer with a peracid. Preferably in the present invention, up to 30 percent of the original olefinic unsaturation is epoxidized (more precisely, up to 5 milliequivalents per gram of polymer).

Other epoxidized block copolymers which may be utilized in the present invention are disclosed in U.S. Patent No. 4,135,037. These epoxidized block copolymers comprise at least one epoxidized conjugated diolefin block and at least one nonvinyl arene block with weight ratio of conjugated diolefins to monovinyl arenes of 45:55 to 95:5. From 5 to 80 percent of the initial olefinic double bonds are epoxidized, the epoxidation being by any known method, such as the reaction with organic peracids. As applied to the present invention, the epoxidation may be up to about 30% (not to exceed 5 milliequivalents of epoxide per gram of polymer) and lower levels of residual unsaturation as described herein are preferred.

The cross-linking agents which are useful in the present invention are amino resins. Amino-type cross-linking

resins have been commonly used to cure acrylic, polyester and "advanced" epoxy resins containing functional groups such as hydroxyl, amide, mercaptan and carboxyl groups for many years in industrial coatings. It has unexpectedly been found that amino cross-linking resins are useful in curing sterically hindered epoxidized polymers lacking active protons as described above.

For the purposes of this invention, an amino resin is a resin made by reaction of a material bearing NH groups with a carbonyl compound and an alcohol. The NH bearing material is commonly urea, melamine, benzoguanamine, glycoluril, cyclic ureas, thioureas, guanidines, urethanes, cyanamides, etc. The most common carbonyl component is formaldehyde and other carbonyl compounds include higher aldehydes and ketones. The most commonly used alcohols are methanol, ethanol, and butanol. Other alcohols include propanol, hexanol, etc. American Cyanamid sells a variety of these amino resins, as do other manufacturers. American Cyanamid's literature describes three classes or "types" of amino resins that they offer for sale.

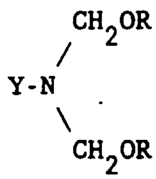 or 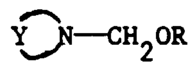 or 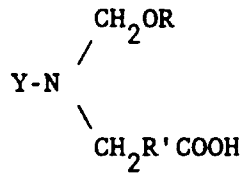

Type 1

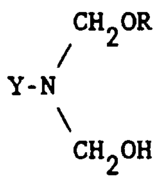 or 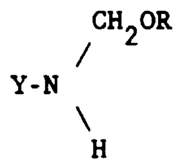

Type 2 Type 3

where Y is the material that bore the NH groups, the carbonyl source was formaldehyde and R is the alkyl group from the alcohol used for alkylation. Although this type of description depicts the amino resins as monomeric material of only one pure type, the commercial resins exist as mixtures of monomers, dimers, trimers, etc. and any given resin may have some character of the other types. Dimers, trimers, etc. also contain methylene or ether bridges. Generally, type 1 amino resins are preferred in the present invention.

For example, the following type 1 amino resins can be used to achieve the purpose of the present invention: CYMEL 303 - hexamethyoxymethylmelamine resin where R is $CH_3$, CYMEL 1116 - a melamine-formaldehyde resin where R is a mixture of $CH_3$ and $C_2H_5$, CYMEL 1156 - a melamine-formaldehyde resin where R is $C_4H_9$, CYMEL 1123 - benzoguanamine-formaldehyde resin where R is a mixture of $CH_3$ and $C_2H_5$, CYMEL 1170 - a glycoluril- formaldehyde resin where R is $C_4H_9$, CYMEL 1171 - a glycoluril-formaldehyde resin where R is a mixture of $CH_3$ and $C_2H_5$, CYMEL 1141 - a carboxyl modified amino resin where R is a mixture of $CH_3$ and i -$C_4H_9$, BEETLE 80 - a urea-formaldehyde resin where R is $C_4H_9$, BEETLE 65 - a urea-formaldehyde resin where R is $CH_3$. CYMEL and BEETLE are trade marks for products made by American Cyanamid Company and are described in its publication mentioned above along with other amino resins useful in the present invention.

A preferred amino resin for use in the present invention is CYMEL 1170 glycoluril-formaldehyde resin where R is $C_4H_9$:

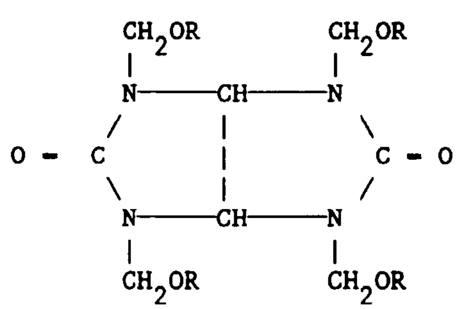

Another preferred amino resin for use in the present invention is BEETLE 80 urea-formaldehyde resin where R is $C_4H_9$ whose ideal monomeric structure is depicted:

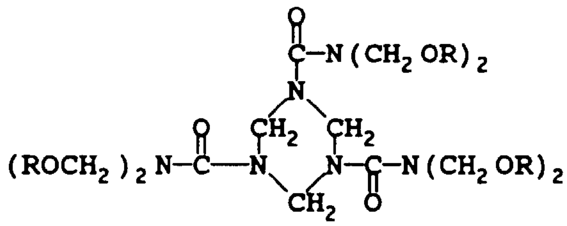

One most preferred amino resin for use in the present invention is CYMEL 303, a highly methylated melamine-formaldehyde resin whose ideal monomeric structure is:

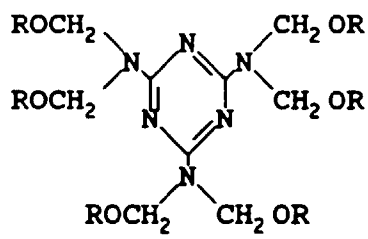

where R is $CH_3$.

Since there are no functional groups, such as hydroxyl, amide, mercaptan or carboxyl groups, in the epoxidized polymers which are cured according the present invention, the conventional mechanism by which these amino resins cure functionalized polymers cannot be used to explain the reaction in the present system. A hypothesis which has been put forth as a theory herein, is that the carbonium ion,

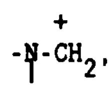

for example, seeks electrons at the oxygen of the epoxy groups on the polymer to effect cross-linking. Thus, the theoretical reaction mechanism is as follows using an epoxidized 1,4-isoprene monomeric unit as an example:

Reaction A: Protonation of amino resin

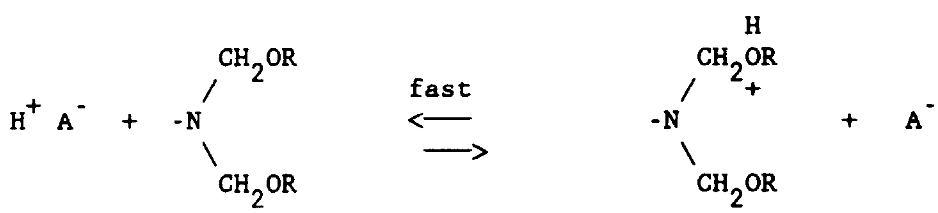


(coinitiators for cross-linking)

Reaction B: Dealkylation and generation resin fragment carbocation

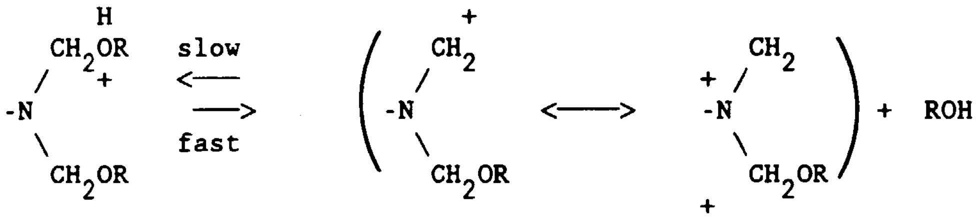


(designated $N-CH_2$)

Reaction C: Addition to Epoxy Groups

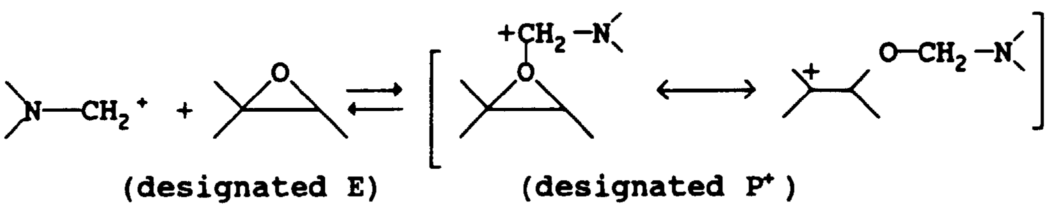

(designated E) (designated $P^+$)

Reaction D: "Cation transfer" to amino resin

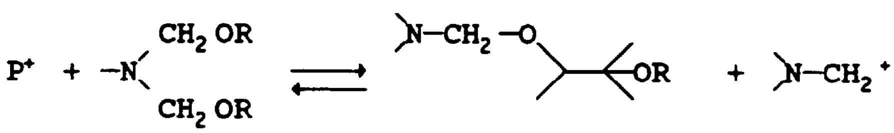

(Similar reaction occurs with the product of Reaction E, below)

Reaction E: Reactions leading to polyetherification

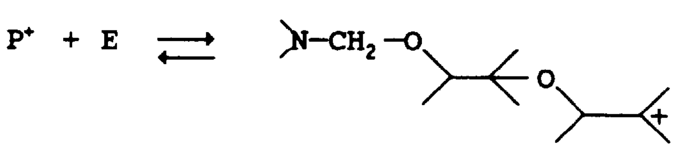

Cross-linking occurs by a combination of Reaction E and Reaction C. A cross-link occurs through Reaction C when $>N-CH_2+$ represents another reactive group of an amino resin molecule that has already reacted with at least one epoxidized repeat unit of another polymer chain. Self condensation of the amino resin may also contribute to cross-linking.

Reaction F: Chain transfer/termination

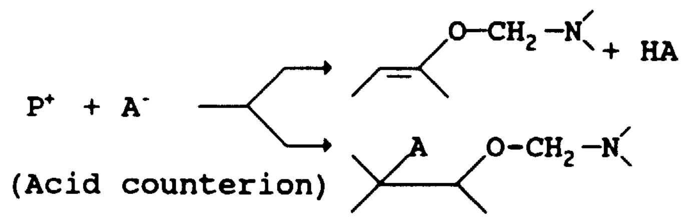

As will be seen by reviewing the examples below, the cure results with the amino resins of the present invention are reasonably consistent with the above reaction mechanism.

According to this mechanism, curing should be extremely facile for polymers possessing epoxy groups that can open to yield stable secondary, and, especially, stable tertiary carbocations in Reaction C. As stated above, isoprene is the preferred conjugated diene monomer for use in the present invention because it is readily available and widely used in commercial polymers.

It is preferred that the amino resin be used in an amount ranging from 0.5 to 40% of the weight of the polymer if it is desired to effect a full cure. More preferably, for adhesives, the amount should be from 1 to 20% and most preferably between 2 and 10% because it is desirable to minimize appearance problems and major changes in the elasticity of the polymer. For coatings, it is preferable that higher levels be used, preferably 9 to 30%, most preferably 9 to 16%, in order to achieve the desired hardness and to minimize tack.

A proton-donating acid catalyst is required to achieve the purposes of the present invention, i.e., cross-link the polymer using the amino resins described above. It is preferred that the amount of the acid catalyst used range from 0.1 to 4% of the weight of the polymer to be certain there is sufficient acid but an excess can be undesirable. Most preferably, from 0.5 to 2% of the weight of the polymer is used. These ratios are sufficient if neat polymer is used. However, if the polymer is diluted, more acid will probably be necessary. The presence of a strong proton-donating acid is normally required to catalyze the cross-linking reaction of many amino resins which are useful in the present invention. However, some medium strength and even relatively weak acids may also be effective depending upon the amino resins used. Generally, the most active catalyst are those with the lowest pKa values. The following list of acid catalyst which may be used in the present invention is arranged according to increasing pKa value: mineral acids, Cycat 4040 (Cycat is a trade mark) catalyst (p-toluene sulphonic acid), Cycat 500 catalyst (dinonylnaphthalene disulphonic acid), Cycat 600 catalyst (dodecyl benzene sulphonic acid), oxalic acid, maleic acid, hexamic acid, phosphoric acid, Cycat 296-9 catalyst (dimethyl acid pyrophosphate), phthalic acid and acrylic acid (copolymerized in polymer), and trifluoromethane sulphonic acid. Other acid catalysts which may be used are described in the aforementioned American Cyanamid Company publication. Also, 3M Brand Resin Catalyst FC-520 (diethylammonium salt of trifluoromethane sulphonic acid) may be used. Cycat 600 was found to be a very useful catalyst.

The curing generally occurs with 5 seconds to 30 minutes, preferably 10 to 30 minutes. However, curing could occur over a period of up to 60 days such as for construction mastics, laminating adhesives and flexible packaging laminating adhesives.

The temperature generally ranges from -5 °C to 400°C. 100 to 300 °C is preferred and 100 to 200 °C is most preferred. In some applications, such as coil coating, curing is accomplished through heating to a maximum surface temperature of up to 400 °C. If this cure schedule is used, the time at this temperature is generally very short (on the order of 5 seconds) and cure continues as the surface cools.

Blocking agents are commonly used to prevent premature catalyst activity. Amines such as triisopropanolamine and dimethylethanolamine work by buffering the effect of the acid and block it from catalyzing the reaction between the polymer and the amino resin. Other blocking agents include triethylamine, methyldiethanolamine, diethylethanolamine, triethanolamine, diisopropanolamine, morpholine and 2-amino-2-methyl-1-propanol, water, primary, secondary and tertiary alcohols, as well as others described in the aforementioned American Cyanamide Company publication.

In general, the method for carrying out the cross-linking of the block copolymers is as follows: Mix the block copolymer with other formulating ingredients and mix in the desired amino resin. The acid co-initiator is added shortly before application of the formulation to the substrate. The substrate with the formulation is heated by a suitable means to 100 °C - 500 °C to effect cure. To maintain a long package shelf life or a reasonable pot life in case of a hot melt formulation a suitable amine, alcohol or water is added to the formulation to block the acid and the curing reactions. Upon application of heat, the blocking agents are driven off and cure is effected.

The present invention has many advantages. One advantage is that it avoids the problem of radiation curing which

primarily is the cost of the expensive equipment or formulation ingredients required for such cross-linking. The present invention also avoids the problems associated with radiation cure of coatings on irregularly-shaped objects. This type of chemical cross-linking is a good cross-linking system for a solvent-borne formulation since the coated object is generally placed in an oven to drive off the solvent and the cure cross-linking can be achieved at the same time. Amino resin-cured coatings of this type are common in the automotive and general metal finishing industries. One of the most important advantages of the present invention is that it allows cross-linking of the polymer sometime after application of the formulation. For instance, all of the ingredients could be mixed in with the polymer and a slowly decomposing or evaporating blocking agent could be added. The acid catalyst would not catalyze the reaction until the blocking agent decomposes or evaporates. If the right combination of materials is chosen, the curing could take place over a period of many months. This could be of advantage for uses where it is desired that the curing take place after the service temperature has been reached so that all stresses have been relieved (i.e. automotive and electrical product adhesives).

The present invention also provides the chemically cross-linked polymer made according to the method of the invention.

The cross-linked materials of the present invention are useful in adhesives (including pressure sensitive adhesives, contact adhesives, laminating adhesives and assembly adhesives), sealants, coatings, films (such as those requiring heat and solvent resistance), printing plates, fibers, and as modifiers for polyesters, polyethers and polyamides. In addition to the epoxidized polymer and any curing aids or agents, products formulated to meet performance requirements for particular applications may include various combinations of ingredients including adhesion promoting or tackifying resins, plasticizers, fillers, solvents, and stabilizers, as described in detail in the aforementioned commonly assigned European patent applications.

Compositions of the present invention are typically prepared by blending the components at an elevated temperature, preferably between 50 °C and 200 °C, until a homogeneous blend is obtained, usually less than three (3) hours. Various methods of blending are known to the art and any method that produces a homogeneous blend is satisfactory. The resultant compositions may then preferably be used in a wide variety of applications. Alternatively, the ingredients may be blended into a solvent.

Adhesive compositions of the present invention may be utilized as many different kinds of adhesives' for example, laminating adhesives, flexible packaging laminating adhesives, pressure sensitive adhesives, tie layers, hot melt adhesives, solvent borne adhesives and waterborne adhesives in which the water has been removed before curing. The adhesive can consist of simply the epoxidized polymer or, more commonly, a formulated composition containing a significant portion of the epoxidized polymer along with other known adhesive composition components.

One preferred use of the present formulation is the preparation of coatings for substrates that can be baked at the temperatures described above. Such coatings are expected to be of particular importance for automotive and general metal finishes, especially coil coats. As will be seen in the following examples, coatings can be prepared with excellent colour, clarity, hardness and adhesion. If substantially saturated polymers are used, the weatherability of the resulting films is expected to be excellent.

Another preferred use of the present formulation is the preparation of pressure-sensitive adhesive tapes and the manufacture of labels. The pressure-sensitive adhesive tape comprises a flexible backing sheet and a layer of the adhesive composition of the instant invention coated on one major surface of the backing sheet. The backing sheet may be a plastic film, paper or any other suitable material and the tape may include various other layers or coatings, such as primers, and release coatings, which are used in the manufacture of pressure-sensitive adhesive tapes. Alternatively, when the amount of tackifying resin is zero, the compositions of the present invention may be used for adhesives that do not tear paper and moulded goods.

The following Examples illustrate the invention with Examples 1, 4 and 5 providing comparison examples.

EXAMPLE 1

An epoxidized partially unsaturated star polymer was reacted with 4% wt. of a butylated glycoluril resin (Cymel 1170, American Cyanamid) and 1.0% wt. of an arenesulphonic acid catalyst (Cycat 600, American Cyanamid) at about 150 °C for 20 minutes, as a thin film on Mylar. The polymer possessed approximately 17 arms, each of a total molecular weight of 3,690. Each arm consisted of a 3,340 molecular weight hydrogenated butadiene (E/B) segment radiating from the core, tipped with about 4.3 isoprene units, 2.1 of which were epoxidized for a total of 40 epoxy groups per molecule. A total of 0.66 Meq epoxy/g of polymer was present. The cured composition was placed in toluene and the insoluble portion collected. About 15% of the composition was insoluble. Substitution of the unepoxidized precursor resulted in less than 1% gel. The level of tertiary unsaturation sites was clearly too low in this polymer to effect any significant cure.

EXAMPLE 2

Coatings compositions were prepared using hexamethoxymethyl melamine (Cymel 303, American Cyanamid), Cycat 600, and a star polymer of the following structure:

$$DVB[EB/S\text{-}eI]_n$$

Where DVB is divinylbenzene (the coupling agent), EB is ethylene/butylene (hydrogenated butadiene), eI is epoxidized isoprene and n is 15 to 20. Each of the n arms has a molecular weight of 5,100 and the overall molecular weight is approximately 88,000. The unsaturated precursor was prepared by polymerizing short (4-6 repeat units) isoprene blocks and then adding butadiene and styrene in the presence of a randomizing agent to produce a block comprised of a random mixture of 50% of each monomer. The arms were then coupled with DVB. The polymer was then partially hydrogenated and epoxidized to introduce 0.65 Meq/g of epoxy functionality, primarily in the isoprene blocks for a total of 65 epoxy groups per molecule, all of which are either di- or tri-alkyl substituted and the majority are tri-alkyl substituted. The melamine was used at 4, 9, 16 and 28 weight percent of the solids and Cycat 600 as the catalyst was added at 0.1 gram per gram of the melamine. The solids were dissolved to 50% wt. in 90/10 xylene/n-butanol. Approximately 1.5 mil films were cast onto aluminium and steel and then baked at 200 °C for 10 minutes or 150 °C for 20 minutes. The films cured at 200 °C were slightly coloured but clear while films cured at 150 °C were clear and colourless.

Films made from cured polymers were evaluated for mechanical properties. The appearance was judged visually. The pencil hardness was performed according to the standard method of drawing successively harder pencil leads across the coating until it was scratched or gouged. The MEK (methyl ethyl ketone) rub cycles test was performed according to the standard method of drawing an MEK-moistened cloth across the coating for 100 cycles, or until breakthrough to the substrate occurred (one cycle equals one forward and one backward stroke). Crosshatch adhesion testing was performed according to the standard method of cutting a crosshatch pattern and contacting with a pressure sensitive tape (ASTM D3359). The amount of the coating lifted off determines the rating. Ratings are from 0-5 with 5 representing no coating lifted and 0 representing removal of greater than 65% of the coating. The results are summarized in Table 1.

Table 1

| | | Hardness[2] | | Xhatch | MEK Rub |
|---|---|---|---|---|---|
| Cure[1] | % Amino Resin | Scratch | Gouge | Adhesion | Cycles |
| A | 3.8 | HB-H | F-2H | 5 | 100+ |
| A | 9.0 | H | 2H | 4-5 | 100+ |
| A | 16.4 | H | 2H | 4-5 | 90 |
| A | 22.5 | F | H | 0 | 85 |
| A | 27.7 | F-H | H-2H | 0 | 55-100 |
| B | 3.8 | HB | F | 0 | 40 |
| B | 9.0 | F | H | 0 | 80 |
| B | 16.4 | H | 2H | 3 | 65 |
| B | 22.5 | 2H | 3H | 0 | 60 |
| B | 27.7 | 4H | 5H | 0 | 60 |

[1] A = 200 °C for 10 minutes
B = 150 °C for 20 minutes
[2] 6B<5B<4B<3B<2B<B<HB<F<H<2H<3H<4H<5H<6H

Films with between 9% and 17% melamine cured at 200 °C had pencil hardness of "H", a crosshatch adhesion value of at least 4 and withstood 180 or more MEK rub cycles. Control films containing only polymer and catalyst gelled, but the films were dark coloured and tacky. Control films prepared without the catalyst did not cure. These results were surprising, as it is commonly believed that hydroxyl, carboxylic acid or amine groups are required for melamine cure to be successful. Formulations containing 27.7-16.4% melamine gelled after standing for about a week at room temperature.

EXAMPLE 3

An epoxidized, unsaturated star polymer was reacted with Cymel 303 (16.4%) and Cycat. 600 at (1) 150 °C for

20 minutes and (2) 200 °C for 10 minutes as a 1 to 2 mil film on steel, as described in the previous example. Films were also cast and cured on Mylar as described above. This polymer possessed 17 arms, each of a total molecular weight of 6,590. Each arm consisted of a 5,770 molecular weight butadiene segment, radiating from the core and tipped with 12 (predominately 1,4-)isoprene units. The polymer was epoxidized to a level of 1.71 Meq/g polymer for a total of 180 epoxy groups per molecule. Most of the epoxidation occurred in the polyisoprene segments. The cured composition had good finger tack and cohesive strength as required of a pressure sensitive adhesive. Substitution of the unepoxidized precursor resulted in films lacking any cohesive strength. The level of olefins possessing tertiary unsaturation (TU sites) was clearly too low to allow melamine cure.

Films cast on Mylar were soaked in toluene and the insoluble portions collected and washed. Formulations cured at 150 °C and 200 °C were 84% and 83% gelled, respectively. The same formulation prepared from the unepoxidized precursor gelled to only 7.6% when cured at 200 °C for 10 minutes. Up to 16% gel may be present due to self-condensation of the amino resin.

EXAMPLE 4

An attempt was made to cure low molecular weight epoxy resins by the method of this invention. A hydroxy-free 2:1 adduct of epichlorohydrin and bis-phenol A (Epon 825 made by Shell) was mixed with Cymel 303 at 3.8, 9.0, 16.4 and 27.7 weight percent and the appropriate level of catalyst was added. Due to the low viscosity of the components, a 75 wt.% solids solution in 90:10 xylene/n-butanol was used to cast onto steel plates. This formulation wet the steel very poorly and tended to puddle. The plates were cured at 150 °C for 20 minutes. All solutions remained relatively low viscosity liquids for at least 12 hours after baking. On standing at ambient conditions some viscosity build was noticed but this is likely due to reaction of the glycidal epoxy groups in the presence of atmospheric moisture. A cycloaliphatic resin, ERL4221 (from Union Carbide) was also used to prepare a 16.4 wt.% Cymel 303 formulation. A coating prepared from this formulation was baked at 150 °C for 20 minutes. No evidence of cure was observed.

EXAMPLE 5

The polymer of Example 1 was mixed with Cymel 303 at 16.4%wt. and Cycat 600, cast onto Mylar film and cured at (1) 150 °C for 20 minutes and (2) 200 °C for 10 minutes. These formulations did not cure to a high gel content, but the resulting films were clear, tacky and had some cohesive strength. Increasing the melamine level to 27.7 %wt. resulted in cure. These films had little tack and were white and hazy, suggesting that the amino resin phase separates during cure. Comparison with Examples 2 and 3 suggests that higher levels of epoxidation are advantageous to achieve high gel at low melamine levels. This appears particularly true for polymers without styrene in the arms.

Gel tests were run as described previously. Both the epoxidized polymer and its unepoxidized precursor failed to cure with 16.4% melamine. The gel contents were 6.3% and 8.5% respectively. However, the 27.7% melamine formulation cured to 95.5%.

EXAMPLE 6

An epoxidized styrene-butadiene-styrene polymer (77,000 molecular weight, 30% styrene) possessing 1.17 Meq/g polymer of primarily 1,4 butadiene-derived epoxy groups (90 per molecule) was cured with 16.4% Cymel 303 and Cycat 600 at 150 °C for 20 minutes or 200 °C for 10 minutes as films on Mylar and steel as described previously. The resulting films were clear, glossy and free of tack. Both films (cast on steel) resisted over 200 MEK rub cycles. Clearly, disubstituted epoxy groups are capable of curing under the present invention when present at the level of greater than 50 per molecule.

## Claims

1. A method of curing epoxidized diene polymers which do not have a significant amount of functional groups of the structure XH, where X is nitrogen, sulphur or oxygen, which undergo a cross-linking reaction with amino resins and which have at least 50 olefinic epoxy groups per molecule which are predominantly di-, tri-, or tetra-alkyl substituted, said method comprising mixing such a polymer with an amino resin in the presence of a proton-donating acid catalyst.

2. The method of claim 1 wherein the polymer is an epoxidised block copolymer which comprises at least one polymer block which is comprised of diene monomer units, hydrogenated diene monomer units and/or hydrogenated diene and monoalkenyl aromatic hydrocarbon monomer units, and at least one block which contains more epoxidized

diene units than the other block.

3. The method of claim 1 wherein the amino resin contains at least one substituted amino formaldehyde group.

4. The method of claim 3 wherein the amino resin is selected from the group consisting of alkylated melamine-formaldehyde resin, glycoluril-formaldehyde resin and urea-formaldehyde resin.

5. The method of claim 1 wherein the amount of amino resin used ranges from 0.5 to 40% of the weight of the polymer.

6. The method of claim 1 wherein the curing is carried out at a temperature of from 100 to 400 °C for 5 seconds to 30 minutes.

7. The method of claim 5 wherein the temperature is from 100 to 200 °C and the time is from 10 to 30 minutes.

8. The method of claim 1 wherein the amount of the acid catalyst used ranges from 0.1 to 4% of the weight of the polymer.

9. The method of claim 8 wherein the acid catalyst is selected from the group consisting of mineral acids, p-toluene sulphonic acid, dinonylnaphthalene disulphonic acid, dodecylbenzene sulphonic acid, oxalic acid, maleic acid, hexamic acid, phosphoric acid, dimethyl acid pyrophosphate, phthalic acid, acrylic acid and trifluoromethane sulphonic acid.

10. The method of claim 1 wherein the polymer contains isoprene.

11. A chemically cross-linked polymer made according to the methods of claims 1-10.

12. The method of claim 1 wherein the epoxidized diene polymer is also hydrogenated.

13. The method of claim 1 wherein the polymer contains up to 75% of a vinyl aromatic hydrocarbon.

14. An adhesive made with the polymer of claim 11.

15. A sealant made with the polymer of claim 11.

16. A coating made with the polymer of claim 11.

17. A film made with the polymer of claim 11.

18. The method of claim 1 wherein the sterically hindered epoxidized polymer is cross-linked with a polymer which has a significant number of functional groups of the structure XH, where X is nitrogen, sulphur or oxygen.

19. The method of claim 18 wherein the polymer with functional groups is selected from the group consisting of polyesters, "advanced" epoxies, acrylics, alkyds and polyurethanes.

20. A cured polymer made according to the method of claim 18.

**Patentansprüche**

1. Verfahren zur Härtung von epoxidierten Dienpolymeren, die keine wesentliche Menge an funktionellen Gruppen der Formel XH, worin X für Stickstoff, Schwefel oder Sauerstoff steht, aufweisen, die eine Vernetzungsreaktion mit Aminoharzen eingehen und mindestens 50 olefinische Epoxidgruppen pro Molekül aufweisen, die überwiegend di-, tri- oder tetraalkylsubstituiert sind, bei dem man ein derartiges Polymer in Gegenwart eines Protonen abgebenden sauren Katalysators mit einem Aminoharz mischt.

2. Verfahren nach Anspruch 1, bei dem man als Polymer ein epoxidiertes Blockcopolymer, das mindestens einen aus Dienmonomereinheiten, hydrierten Dienmonomereinheiten und/oder hydrierten Dienen und monoalkenylaromatischen Kohlenwasserstoffen als Monomereinheiten aufgebauten Polymerblock und mindestens einen Block,

der mehr epoxidierte Dieneinheiten enthält als der andere Block, enthält, einsetzt.

3. Verfahren nach Anspruch 1, bei dem man ein Aminoharz einsetzt, das mindestens eine substituierte Aminoformaldehydgruppe enthält.

4. Verfahren nach Anspruch 3, bei dem man das Aminoharz aus der Gruppe bestehend aus alkyliertem Melamin-Formaldehyd-Harz, Glykoluril-Formaldehyd-Harz und Harnstoff-Formaldehyd-Harz auswählt.

5. Verfahren nach Anspruch 1, bei dem man das Aminoharz in einer Menge von 0,5 bis 40%, bezogen auf das Gewicht des Polymers, einsetzt.

6. Verfahren nach Anspruch 1, bei dem man 5 Sekunden bis 30 Minuten bei einer Temperatur von 100 bis 400°C härtet.

7. Verfahren nach Anspruch 5, bei dem man eine Temperatur von 100 bis 200°C und eine Zeit von 10 bis 30 Minuten wählt.

8. Verfahren nach Anspruch 1, bei dem man den sauren Katalysator in einer Menge von 0,1 bis 4%, bezogen auf das Gewicht des Polymers, einsetzt.

9. Verfahren nach Anspruch 8, bei dem man den sauren Katalysator aus der Gruppe bestehend aus Mineralsäuren, p-Toluolsulfonsäure, Dinonylnaphthalindisulfonsäure, Dodecylbenzolsulfonsäure, Oxalsäure, Maleinsäure, Hexandisäuremonoamid, Phosphorsäure, saurem Dimethylpyrophosphat, Phthalsäure, Acrylsäure und Trifluormethansulfonsäure auswählt.

10. Verfahren nach Anspruch 1, bei dem man ein Isopren enthaltendes Polymer einsetzt.

11. Chemisch vernetztes Polymer, hergestellt nach den Verfahren gemäß den Ansprüchen 1-10.

12. Verfahren nach Anspruch 1, bei dem man ein epoxidiertes Dienpolymer einsetzt, das auch hydriert ist.

13. Verfahren nach Anspruch 1, bei dem man ein Polymer einsetzt, das bis zu 75% eines vinylaromatischen Kohlenwasserstoffs enthält.

14. Klebstoff, hergestellt mit dem Polymer gemäß Anspruch 11.

15. Dichtungsmasse, hergestellt mit dem Polymer gemäß Anspruch 11.

16. Überzug, hergestellt mit dem Polymer gemäß Anspruch 11.

17. Film, hergestellt mit dem Polymer gemäß Anspruch 11.

18. Verfahren nach Anspruch 1, bei dem man das sterisch gehinderte epoxidierte Polymer mit einem Polymer vernetzt, das eine wesentliche Menge an funktionellen Gruppen der Formel XH, worin X für Stickstoff, Schwefel oder Sauerstoff steht, aufweist.

19. Verfahren nach Anspruch 18, bei dem man das Polymer mit funktionellen Gruppen aus der Gruppe bestehend aus Polyestern, "vorverlängerten" Epoxiden, Acrylverbindungen, Alkyden und Polyurethanen auswählt.

20. Gehärtetes Polymer, hergestellt nach dem Verfahren gemäß Anspruch 18.

**Revendications**

1. Procédé de durcissement de polymères de diènes époxydés qui ne comportent pas de proportion notable de radicaux fonctionnels de la structure X-H, où X représente un atome d'azote, de soufre ou d'oxygène, qui subissent une réaction de réticulation avec des aminorésines et qui comportent au moins 50 radicaux époxy-oléfiniques par molécule, qui sont en prédominance di-, tri- ou tétra-alkyle-substitués, caractérisé en ce que l'on mélange un tel

polymère à une aminorésine en présence d'un catalyseur acide donnant des protons.

2. Procédé suivant la revendication 1, caractérisé en ce que le polymère est un copolymère séquencé époxydé qui comprend au moins une séquence polymérique qui est constituée d'unités monomériques du type diène, d'unités monomériques du type diène hydrogéné et/ou d'unités monomériques du type hydrocarbure monoalcényle aromatique et/ou diène hydrogéné, et au moins une séquence qui contient plus d'unités du type diène époxydé que l'autre séquence.

3. Procédé suivant la revendication 1, caractérisé en ce que l'aminorésine contient au moins un groupe aminoformaldéhyde substitué.

4. Procédé suivant la revendication 3, caractérisé en ce que l'on choisit l'aminorésine dans le groupe formé par une résine d'urée-formaldéhyde, une résine de glycolurile-formaldéhyde, ou une résine de mélamine-formaldéhyde, alkylée.

5. Procédé suivant la revendication 1, caractérisé en ce que la proportion d'aminorésine utilisée varie de 0,5 à 40% en poids du polymère.

6. Procédé suivant la revendication 1, caractérisé en ce que l'on opère le durcissement à une température de 100 à 400°C pendant 5 secondes à 30 minutes.

7. Procédé suivant la revendication 5, caractérisé en ce que la température varie de 100 à 200°C et la durée fluctue de 10 à 30 minutes.

8. Procédé suivant la revendication 1, caractérisé en ce que la quantité du catalyseur acide employée varie de 0,1 à 4% du poids du polymère.

9. Procédé suivant la revendication 8, caractérisé en ce que l'on choisit le catalyseur acide dans le groupe formé par les acides minéraux, l'acide p-toluènesulfonique, l'acide dinonylnaphtalènedisulfonique, l'acide dodécylbenzènesulfonique, l'acide oxalique, l'acide maléique, l'acide hexamique, l'acide phosphorique, le pyrophosphate acide de diméthyle, l'acide phtalique, l'acide acrylique et l'acide trifluorométhanesulfonique.

10. Procédé suivant la revendication 1, caractérisé en ce que le polymère contient de l'isoprène.

11. Polymère chimiquement réticulé obtenu par mise en oeuvre de l'un quelconque des procédés des revendications 1 à 10.

12. Procédé suivant la revendication 1, caractérisé en ce que le polymère du type diène époxydé est également hydrogéné.

13. Procédé suivant la revendication 1, caractérisé en ce que le polymère contient jusqu'à 75% d'un hydrocarbure vinyle aromatique.

14. Adhésif obtenu à l'aide du polymère suivant la revendication 11.

15. Agent ou produit d'étanchement ou de calfatage obtenu avec le polymère suivant la revendication 11.

16. Revêtement obtenu avec le polymère suivant la revendication 11.

17. Film obtenu avec le polymère suivant la revendication 11.

18. Procédé suivant la revendication 1, caractérisé en ce que l'on réticule le polymère époxydé et stériquement empêché avec un polymère qui comporte un nombre important de radicaux fonctionnels de la structure X-H, où X représente un atome d'azote, de soufre ou d'oxygène.

19. Procédé suivant la revendication 18, caractérisé en ce que le polymère avec des radicaux fonctionnels est choisi dans le groupe formé par les polyesters, les époxydes "de progrès", les produits acryliques, les produits alkyds et les polyuréthannes.

**20.** Polymère durci obtenu par mise en oeuvre du procédé suivant la revendication 18.